# EUROPÄISCHE PATENTSCHRIFT

(11) **EP 4 452 732 B1**
(45) Veröffentlichungstag und Bekanntmachung des Hinweises auf die Patenterteilung: **17.12.2025**
(21) Anmeldenummer: 22843151.6
(22) Anmeldetag: 20.12.2022
(51) Int. Cl.: B62H 3/04, B62H 3/08

(54) **FAHRRADSTÄNDERSYSTEM**
BICYCLE RACK SYSTEM
SYSTÈME DE SUPPORT POUR VÉLOS

(30) Priorität: 23.12.2021 LU 501080
(43) Veröffentlichungstag der Anmeldung: 30.10.2024
(73) Patentinhaber: Rahmann, Nils, 59909 Bestwig (DE)
(72) Erfinder: RAHMANN, Markus, 59909 Bestwig-Ostwig (DE)
(74) Vertreter: Habermann Intellectual Property Partnerschaft von Patentanwälten mbB
(86) Internationale Anmeldenummer: PCT/EP2022/086830
(87) Internationale Veröffentlichungsnummer: WO 2023/118030

(56) Entgegenhaltungen:
- KR-U- 20130 003 437
- US-A- 3 116 836
- US-A- 5 833 074
- US-A- 556 806
- US-B1- 9 610 993

## Beschreibung

Die Erfindung betrifft ein Fahrradständersystem zur Aufnahme eines Fahrrades in einer Parkposition, wobei das Fahrradständersystem einen Standkörper aufweist, der bei bestimmungsgemäßer Verwendung mit einer Standfläche auf einem Untergrund aufsteht, wobei der Standkörper auf einer entgegengesetzt zur Standfläche weisenden Oberseite des Standkörpers eine rinnenförmige Ausnehmung aufweist, dessen Ausnehmungslängsachse parallel zu einer Standkörperlängsachse des Standkörpers orientiert ist, wobei die Ausnehmung entlang einer Ausnehmungsquerachse eine Ausnehmungsbreite aufweist, sodass ein parallel zur Längsachse ausgerichtetes Laufrad des Fahrrades zumindest abschnittsweise in der Ausnehmung aufnehmbar ist, wobei das Fahrradständersystem eine bügelförmige Abstützvorrichtung mit zwei Bügelschenkeln aufweist, wobei die Abstützvorrichtung mit Bügelschenkelenden der Bügelschenkel an dem Standkörper festgelegt ist, wobei in einer Parkposition des Fahrrads das Laufrad durch mindestens einen Bügelschenkel abstützbar ist, sodass das Fahrrad in einer im Wesentlichen senkrechten Aufstellposition innerhalb des Fahrradständersystems aufstellbar ist.

US 556 806 A offenbart die Merkmale des Oberbegriffs von Anspruch 1.

Die Funktion eines Fahrradständers besteht im Allgemeinen darin, ein Fahrrad für eine gewissen Zeitdauer am Fahrradständer in einer im Wesentlichen aufrechten Stellung zu fixieren. Dabei sind verschieden ausgestaltete Fahrradständer bekannt. Beispielsweise sind für den Außenbereich Fahrradständer bekannt, die als Anlehnbügel ausgestaltet sind. An den Anlehnbügel kann ein Fahrrad in einer aufrechten Stellung angelehnt und mittels eines Fahrradschlosses angeschlossen werden. Diese für den Außenbereich geeignete Fahrradständer sind meist fest mit dem Untergrund verbunden, indem sie in den Boden eingelassen sind oder an einem Fundament verschraubt sind.

Für den Innenbereich sind Fahrradständer bekannt, welche im Wesentlichen aus einem Standkörper bestehen, an dem eine bügelförmige Abstützvorrichtung angebracht ist. Das Fahrrad wird in einer Einparkrichtung in den Fahrradständer eingeschoben, sodass ein Laufrad des Fahrrades in die bügelförmige Abstützvorrichtung eingeführt wird. In der Parkposition des Fahrrades wird das Fahrrad über das Anlehen des Laufrades an der bügelförmigen Abstützvorrichtung in einer nahezu senkrechten Stellung aufgestellt ist. Da der Standkörper im Innenbereich in der Regel nicht fest mit dem Untergrund verbunden ist, ist zur Erreichung einer gewissen Standfestigkeit bei solchen Fahrradständern der Standkörper als flächiger Standkörper mit einer möglichst großen Standfläche ausgestaltet. Die Größe der Standfläche ist jedoch aus Gründen der Handhabbarkeit und der für die Aufstellung des Fahrradständers notwendigen Aufstellfläche nur bis zu einer gewissen Größe sinnvoll vergrößerbar. Bei unbeabsichtigter Berührung des Fahrrades kann der durch das Fahrrad und durch den Fahrradständer gebildete Gesamtschwerpunkt so verschoben werden, sodass der Fahrradständer und das Fahrrad in eine instabile Lage überführt werden, was ein Umfallen des Fahrradständers mit dem darin aufgenommenen Fahrrad zur Folge haben kann. Ein sicherer Stand des Fahrrades ist somit nicht möglich.

Des Weiteren sind die für den Innenraum geeigneten Fahrradständer meist so ausgestaltet, dass diese nur für die Aufnahme bestimmter Fahrradtypen, wie beispielsweise Rennräder oder Mountainbikes mit entsprechenden Reifenabmessungen ausgestaltet sind. Beispielsweise weisen die Rennräder sehr schmale Laufräder mit Reifenbreiten im Bereich von 23 mm bis 35 mm auf, wohingegen die Laufräder von Mountainbikes Reifenbreiten im Bereich von 51 mm bis 61 mm aufweisen. Ein Einführen eines Mountainbikelaufrades in einen für ein Rennrad ausgelegten Fahrradständer ist erst gar nicht möglich. Auf der anderen Seite ist bei einer Aufstellung eines Rennrads in einen für ein Mountainbike geeigneten Fahrradständer keine Standsicherheit geboten.

Als Aufgabe der vorliegenden Erfindung wird es angesehen, einen Fahrradständer bereitzustellen, mit dem verschiedene Fahrräder mit unterschiedlich großen Laufrädern an deren Laufrädern standsicher aufnehmbar sind.

Diese Aufgabe wird erfindungsgemäß dadurch gelöst, dass der Standkörper mehrere zu der Ausnehmungslängsachse beabstandet angeordnete und in gleichem Abstand zu der Ausnehmungslängsachse gegenüberliegende Festlegeabschnitte aufweist, wobei die mehreren Festlegeabschnitte in Längsrichtung des Standkörpers beabstandet zueinander angeordnet sind, wobei die bügelförmige Abstützvorrichtung mit den Bügelschenkelenden lösbar und damit versetzbar an jeweils zwei gegenüberliegenden Festlegeabschnitten festlegbar ist, sodass Fahrräder mit unterschiedlichen Laufraddurchmessern innerhalb des Fahrradständersystems aufstellbar sind.

Für eine besonders stabile Ausgestaltung des Fahrradständersystems kann es vorgesehen sein, dass die bügelförmige Abstützvorrichtung einteilig ausgestaltet ist. Die Abstützvorrichtung ist bei bestimmungsgemäßer Montage der Abstützvorrichtung in Richtung des Standkörpers und in Längsrichtung des Fahrradständersystems geöffnet ausgestaltet. Dadurch, dass das Fahrrad in einer zu der Längsrichtung parallelen Einparkrichtung in das Fahrradständersystem eingeschoben wird, wird das Laufrad des Fahrrades in einfacher Weise durch die bügelförmige Abstützvorrichtung eingeführt und darin aufgenommen.

Vorteilhafterweise ist der erfindungsgemäße Standkörper so ausgestaltet, dass in einer Parkposition das in die Abstützvorrichtung eingeschobene Laufrad mittig auf dem Standkörper aufsteht. Somit kann das Fahrrad je nach Platzverhältnissen an dem Aufstellort des Fahrradständersystems in beiden Richtungen an die Abstützvorrichtung angelehnt werden.

Gängige Laufräder weisen einen Laufraddurchmesser im Bereich von 600 mm bis 700 mm auf. Als Laufraddurchmesser wird der durch die Laufradfelge und durch den Fahrradreifen gebildeter größte Außendurchmesser bezeichnet. In Abhängigkeit des gewählten Fahrradreifens und in Abhängigkeit des Innendrucks in dem Fahrradreifen, kann sich der Durchmesser während der Benutzung des Fahrrades in gewissen Maßen verändern.

Damit durch das erfindungsgemäße Fahrradständersystem unterschiedliche Fahrradtypen, wie beispielsweise Rennräder, Trekkingräder oder Mountainbikes mit voneinander verschiedenen Laufraddurchmessern aufgenommen werden können, ohne, dass ein Laufrad mit dem Fahrradreifen an dem Bügelscheitel anstößt, ist die Abstützvorrichtung versetzbar ausgestaltet. So kann bei großen Laufraddurchmessern die Abstützvorrichtung in Längsrichtung gesehen in einem äußeren Bereich des Standkörpers angeordnet werden. Zur Aufnahme von Fahrrädern mit kleinem Laufraddurchmesser, wie beispielsweise Kinderfahrrädern, kann die bügelförmige Abstützvorrichtung vorteilhafterweise in einem mittigen Bereich des Standkörpers angeordnet sein.

Dadurch, dass das Laufrad jeweils an einer Anlageposition in einer oberen Hälfte des Laufrades mit der Abstützvorrichtung in Anlage ist, ist eine besonders standsichere Abstützung des Fahrrades möglich ist.

Das Fahrradständersystem eignet sich auch besonders gut als Montagehilfe zur Fahrradreparatur. Da das Fahrrad in dem Fahrradständersystem sowohl mit dem Vorder- als auch mit dem Hinterrad zuverlässig gehalten werden kann, können zahlreiche Reparaturen einfach und sicher an dem in dem Fahrradständersystem angeordneten Fahrrad durchgeführt werden.

In einer vorteilhaften Umsetzung des Erfindungsgedankens ist vorgesehen, dass die Festlegeabschnitte als Bohrungen ausgestaltet sind. Dadurch kann das Versetzen der bügelförmigen Abstützvorrichtung in einfacher Weist durch einen Steckvorgang erfolgen, in dem die Bügelschenkelenden in die jeweiligen Bohrungen eingesteckt werden. Außerdem kann die Abstützvorrichtung einfach wieder aus der Bohrung herausgezogen werden. Somit ist eine besonders schnelle und einfache Anpassung des Fahrradständersystems in Abhängigkeit des darin aufzunehmenden Fahrrades möglich.

Optional ist auch vorgesehen, dass die Bohrungen Innengewinde aufweisen und dass die Bügelschenkelenden mit den Innengewinden korrespondierende Außengewinde aufweisen. Dabei wird der Bügelschenkel der mehrteilig ausgestalteten Abstützvorrichtung zunächst mit den jeweiligen Bügelschenkelenden in die Bohrungen eingeschraubt. Anschließend kann das Bügelscheitelelement auf die Bügelschenkel aufgesteckt werden, um eine standsichere Verbindung beider Bügelschenkel herzustellen.

Für eine besonders große Standsicherheit des Fahrradständersystems, ist in einer vorteilhaften Ausgestaltung der Erfindung vorgesehen, dass der Standkörper als massiver Vollkörper ausgestaltet ist. Beispielsweise kann der massive Standkörper aus Kunststoff, aus Gummi, aus Beton oder aus einem Metall bestehen. Durch eine massive Ausgestaltung weist der als massiver Vollkörper ausgestaltete Standkörper eine große Masse auf, sodass dieser eine große Sicherheit gegenüber einem Umkippen aufweist.

Für eine besonders große Standsicherheit ist in einer vorteilhaften Ausgestaltung des erfindungsgemäßen Fahrradständersystems vorgesehen, dass der Standkörper mindestens ein Befestigungsmittel zur Verankerung des Standkörpers an dem Untergrund aufweist. Dabei kann der Standkörper beispielsweise eine oder mehrere Durchgangsbohrungen aufweisen, durch die der Schraubenschaft einer Befestigungsschrauben hindurchgesteckt und mit dem Untergrund verschraubt werden kann. Die Verankerung des Fahrradständersystems mit dem Untergrund bietet zudem einen Diebstahlschutz gegenüber einem Diebstahl des Fahrradständersystems.

Für einen besonders sicheren Stand des Fahrradständersystem auf dem Untergrund ist in einer vorteilhaften Ausgestaltung des Erfindungsgedankens vorgesehen, dass die Standfläche durch mehrere zwischen dem Untergrund und einer dem Untergrund zugewandten Unterseite des Standkörpers angeordneten Standelemente gebildet ist. Dabei können die Standelemente durch höhenverstellbare Füße gebildet werden. Auch kann es vorgesehen sein, dass die Standelemente zumindest teilweise aus einem rutschfesten Material, wie beispielsweise Gummi ausgestaltet sind, sodass der Standkörper rutschfest auf dem Untergrund aufsteht. Des Weiteren ist es optional vorgesehen, dass die Standelemente als Saugnapf ausgestaltete sind, sodass eine Saugnapfverbindung zwischen dem Standkörper und dem Untergrund herstellbar ist. Solche Standelemente bieten außerdem den Vorteil, dass bei der Benutzung des erfindungsgemäßen Fahrradständersystems im Innenraum eine Beschädigung des möglicherweise kratzempfindlichen Untergrunds vermeidbar ist.

Erfindungsgemäß ist optional auch vorgesehen, dass der Standkörper eine Anschließvorrichtung aufweist, mit der das in das Fahrradständersystem eingeschobene Fahrrad an das Fahrradständersystem festlegbar ist. Die Anschließvorrichtung kann in einfacher Weise als eine an dem Standkörper festgelegte Schlaufe oder Öse ausgestaltet sein, durch die ein Fahrradschloss hindurchführbar ist. Die Schlaufe oder Öse ist vorteilhafterweise aus einem gegenüber einem Durchtrennen gesichertem Werkstoff, wie beispielsweise einem metallischen Werkstoff hergestellt. Es ist aber auch denkbar und vorgesehen, dass die Anschließvorrichtung als an den Standkörper festgelegter Bügel ausgestaltet ist.

Eine als Schlaufe oder als Bügel ausgestaltete Anschließvorrichtung kann außerdem vorteilhafterweise als Tragegriff genutzt werden, um das Fahrradständersystem händisch aufzunehmen und an den Aufstellort zu transportierten. Durch das hohe Gewicht des Fahrradständersystems bei einem massiv ausgestalteten Vollkörper ist das Fahrradständersystem mit einem Tragegriff besonders einfach handhabbar.

Um das Fahrrad in einer Einparkrichtung in besonders einfacher weise in das Fahrradständersystem einschieben zu können, ist in einer vorteilhaften Umsetzung des Erfindungsgedankens vorgesehen, dass die Ausnehmung den Standkörper in Längsrichtung vollständig durchdringt. Somit kann das Fahrrad in zwei verschiedene Einparkrichtungen in das Fahrradständersystem eingeschoben werden.

Vorteilhafterweise ist innerhalb der rinnenförmigen Ausnehmung mindestens eine Erhebung angeordnet, welche bei einem Herausschieben oder Herausziehen des Fahrrades entgegen der Einparkrichtung von dem Laufrad überfahren und überwunden werden muss. Somit ist das Fahrrad gegenüber einem Wegrollen in oder entgegen der Einparkrichtung gesichert.

Um verschiedene Fahrradtypen mit Laufrädern in üblichen und gebräuchlichen Laufradgrößen mit dem Fahrradständersystem aufnehmen zu können, ist in einer vorteilhaften Umsetzung des Erfindungsgedankens vorgesehen, dass die Ausnehmungsbreite vorzugsweise eine Breite im Bereich von 54 mm bis 65 mm aufweist. Dabei kann die Ausnehmungsbreite im Bereich der Oberseite des Standkörpers einen größten Wert aufweisen, wobei die Ausnehmungsbreite in Richtung des innerhalb der rinnenförmigen Ausnehmung angeordneten tiefsten Punkt stetig abnimmt. Somit können auch Laufräder mit schmaleren Laufradbreiten sicher innerhalb der Ausnehmung aufgenommen werden.

In einer vorteilhaften Ausgestaltung der Erfindung ist vorgesehen, dass eine durch die Bügelschenkel erzeugte lichte Breite vorzugsweise eine Breite im Bereich von 65 mm bis 100 mm aufweist und eine lichte Höhe vorzugsweise im Bereich von 650 mm bis 700 mm aufweist. Somit können Fahrräder mit Laufrädern in üblichen und gebräuchlichen Laufradbreite und Laufraddurchmessern mit dem Fahrradständersystem aufgenommen werden.

Um auch Laufräder mit geringen Laufradbreiten, wie beispielsweise Laufräder von Rennrädern, sicher in dem Fahrradständersystem aufnehmen zu können, ist in einer vorteilhaften Umsetzung des Erfindungsgedankens vorgesehen, dass das Fahrradständersystem ein lösbar an die Abstützvorrichtung anordnenbares Abstützelement aufweist, wobei das Abstützelement einen Abstützabschnitt aufweist, der bei bestimmungsgemäßer Montage mit dem Laufrad in Anlage bringbar ist, sodass eine Klemmkraft von dem Abstützelement auf das Laufrad ausübbar ist. Beispielsweise kann die Klemmkraft radial auf eine Lauffläche des Laufrades ausgeübt werden, sodass das Laufrad zwischen dem Abstützabschnitt und dem Standkörper kraftschlüssig festgelegt wird.

Es ist aber auch erfindungsgemäß vorgesehen, dass das Abstützelement so an der Abstützvorrichtung angeordnet ist, dass eine Klemmkraft seitlich auf eine Seitenfläche des Laufrades ausgeübt wird. Somit wird das Laufrad zwischen dem Abstützabschnitt des Abstützelements und einem Bügelschenkel kraftschlüssig festgelegt.

Um mit dem Abstützelement Laufräder mit verschiedenen Laufraddurchmessern innerhalb des Abstützelements kraftschlüssig festlegen zu können, ist in einer vorteilhaften Ausgestaltung der Erfindung vorgesehen, dass das Abstützelement entlang einer Bügelschenkellängsachse des Bügelschenkels verlagerbar ist. Die Betätigung des Abstützelements kann somit in einfacher Weise mit einer Hand verschoben werden. Des Weiteren ist es auch vorgesehen, dass das Abstützelement durch eine Drehbewegung um eine Längsachse des Bügelschenkels betätigbar ist.

Für eine besonders sichere Festlegung des Laufrades an der Abstützvorrichtung ist es erfindungsgemäß vorgesehen, dass das Abstützelement so ausgestaltet ist, dass es eine formschlüssige Festlegung erlaubt. Hierzu ist in einer erfindungsgemäßen Ausgestaltung des Fahrradständersystems vorgesehen, dass der Abstützabschnitt durch eine Anlageoberfläche des Abstützelements gebildet ist, wobei die Anlageoberfläche bei bestimmungsgemäßer Montage des Abstützelements an der Abstützvorrichtung parallel zur Ausnehmungslängsachse und um einen durch die Bügelschenkellängsachse und der Anlageoberfläche eingeschlossenen Anstellwinkel geneigt ist, wobei die Anlageoberfläche in Richtung der Oberseite des Standkörpers weist, sodass Fahrräder mit unterschiedlichen Laufradbreiten und Laufraddurchmessern innerhalb des Fahrradständersystems aufstellbar sind.

Typischerweise wird das Fahrrad mit einem vorderen Laufrad in dem erfindungsgemäßen Fahrradständersystem aufgenommen. Ein unbeabsichtigtes Eindrehen des vorderen Laufrades bei Berührung des Lenkrades ist damit nicht gegeben, wodurch sich ein sicherer Stand des Fahrrades ergibt.

Für den Fall, dass das Fahrrad mit einem hinteren Laufrad in dem Fahrradständersystem aufgenommen ist, kann eine Verdrehung des vorderen Laufrades erfolgen, wodurch die Standfestigkeit reduziert ist. Um dennoch eine hohe Standfestigkeit herzustellen, ist in einer vorteilhaften Umsetzung des Erfindungsgedankens vorgesehen, dass das Fahrradständersystem einen Unterstützungskörper aufweist, der bei bestimmungsgemäßer Verwendung mit einer Standfläche auf einem Untergrund aufstellbar ist und mit einem Laufrad in Eingriff bringbar ist. Dabei kann der Unterstützungskörper klein ausgestaltet sein, da er ausschließlich ein Verdrehen des vorderen Laufrades unterbinden soll. Vorteilhafterweise weist der Unterstützungskörper an der in Richtung des Untergrunds weisende Unterseite eine rutschfeste Oberfläche auf, sodass das darin aufgenommene vordere Laufrad besonders gut gegenüber einer Verdrehung gesichert ist.

Weitere vorteilhafte Ausgestaltungen der Erfindung werden anhand von in den Zeichnungen dargestellten Ausführungsbeispielen erläutert. Es zeigen:
Fig. 1 eine schematische Darstellung des erfindungsgemäßen Fahrradständersystems mit einem in dem Fahrradständersystem aufgestellten Fahrrad in einer perspektivischen Ansicht,
Fig. 2 eine schematische Darstellung des erfindungsgemäßen Standkörpers in einer perspektivischen Ansicht und
Fig. 3 eine schematische Darstellung einer weiteren Ausgestaltung des erfindungsgemäßen Standkörpers in einer perspektivischen Ansicht.

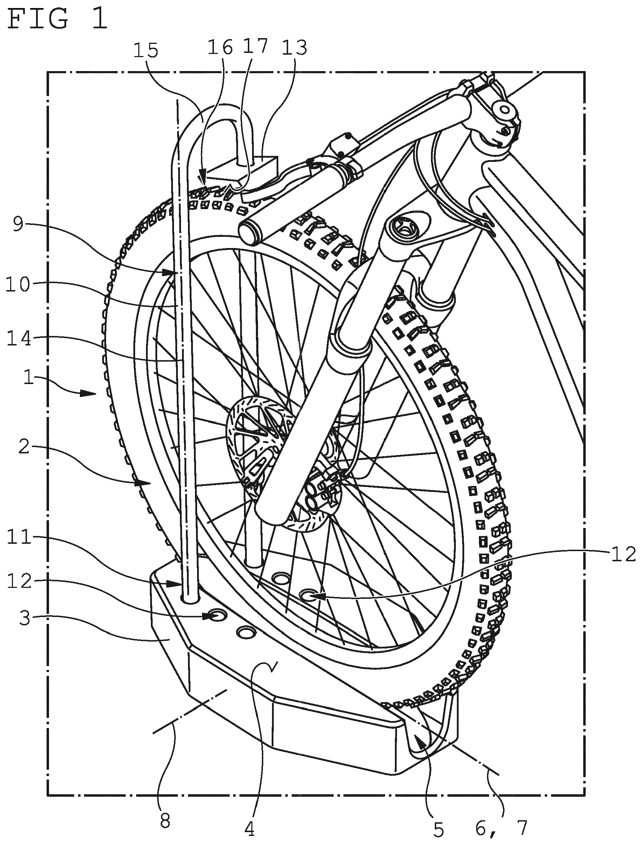

In Fig. 1 ist eine schematische Darstellung eines erfindungsgemäßen Fahrradständersystems 1 mit einem in dem Fahrradständersystem aufgestellten und in einer Parkposition befindlichen Fahrrad in einer perspektivischen Ansicht gezeigt. Das Fahrrad steht mit einem vorderen Laufrad 2 auf einem Standkörper 3 auf. Der Standkörper 3 steht mit einer Standfläche auf einem Untergrund auf. Der Standkörper 3 weist auf einer entgegengesetzt zu der Standfläche weisenden Oberseite 4 des Standkörpers eine rinnenförmige Ausnehmung 5 auf, dessen Ausnehmungslängsachse 6 parallel zu einer Standkörperlängsachse 7 des Standkörpers 3 orientiert ist. Die Ausnehmung weist entlang einer Ausnehmungsquerachse 8 eine Ausnehmungsbreite auf. Des Weiteren weist der Standkörper 2 mehrere zu der Ausnehmungslängsachse 8 beabstandet angeordnete und als Bohrungen ausgestaltete Festlegeabschnitte 12 auf. Das Fahrradständersystem 1 weist eine bügelförmige Abstützvorrichtung 9 mit zwei Bügelschenkeln 10 auf. Die Abstützvorrichtung 9 ist mit Bügelschenkelenden 11 lösbar und damit versetzbar an jeweils zwei gegenüberliegenden Festlegeabschnitten 12 festlegbar. Dazu wird die Abstützvorrichtung 9 mit den Bügelschenkelenden 11 durch einen Steckvorgang in die als Bohrungen ausgestaltete Festlegeabschnitte 12 eingeführt.

Das Fahrradständersystem 1 weist außerdem ein Abstützelement 13 auf, welches lösbar an dem Bügelschenkel 10 festgelegt ist. Dabei ist das Abstützelement 13 entlang einer Bügelschenkellängsachse 14 zwischen einem Bügelscheitel 15 des Abstützelements 13 und dem Bügelschenkelende 11 verlagerbar. Das Abstützelement 13 weist einen Abstützabschnitt 16 auf, der durch eine Anlageoberfläche 17 des Abstützelements 13 gebildet ist. Durch eine Verlagerung des Abstützelements 13 in Richtung des vorderen Laufrads 2 ist das Abstützelement 13 mit dem vorderen Laufrad 2 in Eingriff bringbar, sodass eine seitliche Klemmkraft auf das vordere Laufrad 2 ausgeübt wird. Somit wird das vordere Laufrad 2 zwischen der Anlageoberfläche 17 des Abstützelements 13 und einer Innenseite des Bügelschenkels 10 geklemmt und abgestützt.

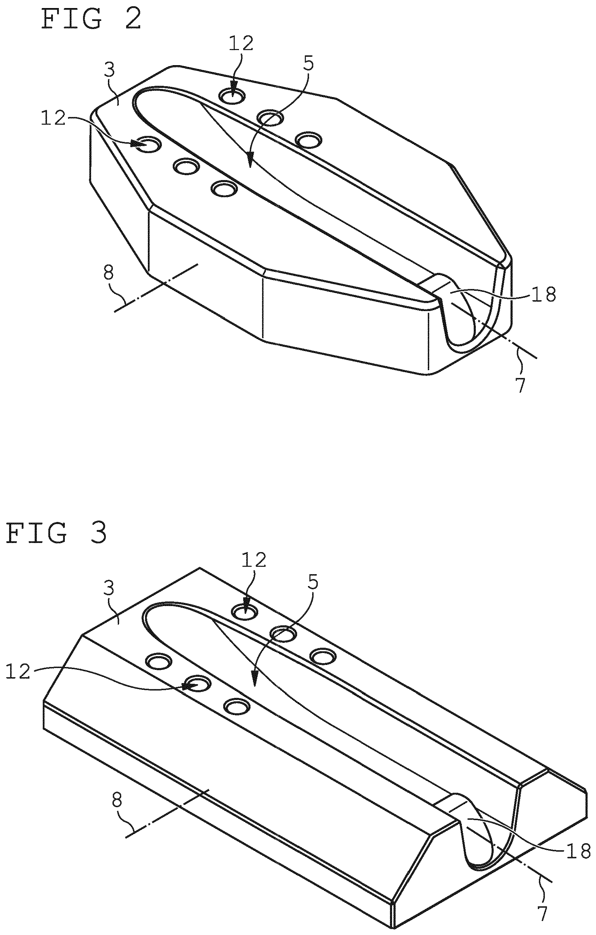

In Fig. 2 und in Fig. 3 sind jeweils ein Standkörper 3 des erfindungsgemäßen Fahrradständersystems 1 dargestellt. In der rinnenförmigen Ausnehmung 5 ist eine sich parallel zu der Ausnehmungsquerachse 8 erstreckende Erhebung 18 angeordnet. Bei einem Ausfahren des Fahrrades in das Fahrradständersystem 1 heraus muss die Erhebung 18 von dem in Fig. 2 und in Fig. 3 nicht dargestellten Laufrad 2 überfahren und überwunden werden. Somit ist ein sicherer Stand des Fahrrades innerhalb des Fahrradständersystems 1 möglich. Die mehreren zu der Ausnehmung 5 beabstandet angeordneten Festlegeabschnitte 12 sind als Bohrungen ausgestaltet, in welche die in Fig. 2 und in Fig. 3 nicht dargestellte Abstützvorrichtung 9 mit den Bügelschwenkelenden 11 einführbar sind. Der in Fig. 2 dargestellte Standkörper 3 unterscheidet sich von dem in Fig. 3 dargestellten Standkörper 3 in der Formgebung des Standkörpers 3. Dadurch, dass Ecken des Standkörpers 3 ausgespart sind, ist eine geringere Aufstellfläche notwendig, wobei in einer zu der Standkörperlängsachse 7 senkrechten Standkörperquerachse eine ähnliche Breite der Aufstellfläche umgesetzt ist. Dadurch ist eine Umkippgefahr des Fahrradständersystems 1 um die Standkörperlängsachse 7 reduziert. Des Weiteren verfügt der Standkörper 3 über ein geringeres Gewicht, sodass eine Handhabung des Standkörpers vereinfacht ist. f

In den Darstellungen der Figuren 1 bis 3 sind lediglich jeweils einzelne mehrerer gleichartiger Elemente exemplarisch mit einem Bezugszeichen gekennzeichnet.

## Patentansprüche

1. Fahrradständersystem (1) zur Aufnahme eines Fahrrades in einer Parkposition, wobei das Fahrradständersystem (1) einen Standkörper (3) aufweist, der bei bestimmungsgemäßer Verwendung mit einer Standfläche auf einem Untergrund aufsteht, wobei der Standkörper (3) auf einer entgegengesetzt zur Standfläche weisenden Oberseite (4) des Standkörpers (3) eine rinnenförmige Ausnehmung (5) aufweist, dessen Ausnehmungslängsachse (6) parallel zu einer Standkörperlängsachse (7) des Standkörpers (3) orientiert ist, wobei die Ausnehmung (5) entlang einer Ausnehmungsquerachse (8) eine Ausnehmungsbreite aufweist, sodass ein parallel zur Längsachse ausgerichtetes Laufrad (2) des Fahrrades zumindest abschnittsweise in der Ausnehmung (5) aufnehmbar ist, wobei das Fahrradständersystem (1) eine bügelförmige Abstützvorrichtung (9) mit zwei Bügelschenkeln (10) aufweist, wobei die Abstützvorrichtung (9) mit Bügelschenkelenden (11) der Bügelschenkel (10) an dem Standkörper (3) festgelegt ist, wobei in einer Parkposition des Fahrrads das Laufrad (2) durch mindestens einen Bügelschenkel (10) abstützbar ist, sodass das Fahrrad in einer im Wesentlichen senkrechten Aufstellposition innerhalb des Fahrradständersystems (1) aufstellbar ist, **dadurch gekennzeichnet, dass** der Standkörper (3) mehrere zu der Ausnehmungslängsachse (6) beabstandet angeordnete und in gleichem Abstand zu der Ausnehmungslängsachse (6) gegenüberliegende Festlegeabschnitte (12) aufweist, wobei die mehreren Festlegeabschnitte (12) in Längsrichtung des Standkörpers (3) beabstandet zueinander angeordnet sind, wobei die bügelförmige Abstützvorrichtung (9) mit den Bügelschenkelenden (11) lösbar und damit versetzbar an jeweils zwei gegenüberliegenden Festlegeabschnitten festlegbar ist, sodass Fahrräder mit unterschiedlichen Laufraddurchmessern innerhalb des Fahrradständersystems (1) aufstellbar sind.

2. Fahrradständersystem (1) gemäß Anspruch 1, **dadurch gekennzeichnet, dass** die Festlegeabschnitte (12) als Bohrungen ausgestaltet sind.

3. Fahrradständersystem (1) gemäß Anspruch 1 oder 2, **dadurch gekennzeichnet, dass** der Standkörper (3) als massiver Vollkörper ausgestaltet ist.

4. Fahrradständersystem (1) gemäß einem der voranstehenden Ansprüche, **dadurch gekennzeichnet, dass** der Standkörper (3) mindestens ein Befestigungsmittel zur Verankerung des Standkörpers (3) an dem Untergrund aufweist.

5. Fahrradständersystem (1) gemäß einem der voranstehenden Ansprüche, **dadurch gekennzeichnet, dass** die Standfläche durch mehrere zwischen dem Untergrund und einer dem Untergrund zugewandten Unterseite des Standkörpers (3) angeordneten Standelemente gebildet ist.

6. Fahrradständersystem (1) gemäß einem der voranstehenden Ansprüche, **dadurch gekennzeichnet, dass** die Ausnehmung (5) den Standkörper (3) in Längsrichtung vollständig durchdringt.

7. Fahrradständersystem (1) gemäß einem der voranstehenden Ansprüche, **dadurch gekennzeichnet, dass** die Ausnehmungsbreite vorzugsweise eine Breite im Bereich von 54 mm bis 65 mm aufweist.

8. Fahrradständersystem (1) gemäß einem der voranstehenden Ansprüche, **dadurch gekennzeichnet, dass** eine durch die Bügelschenkel (10) erzeugte lichte Breite vorzugsweise eine Breite im Bereich von 65 mm bis 100 mm aufweist und eine lichte Höhe vorzugsweise im Bereich von 650 mm bis 700 mm aufweist.

9. Fahrradständersystem (1) gemäß einem der voranstehenden Ansprüche, **dadurch gekennzeichnet, dass** das Fahrradständersystem (1) ein lösbar an die Abstützvorrichtung (9) anordnenbares Abstützelement (13) aufweist, wobei das Abstützelement (13) einen Abstützabschnitt (16) aufweist, der bei bestimmungsgemäßer Montage mit dem Laufrad (2) in Anlage bringbar ist, sodass eine Klemmkraft von dem Abstützelement (13) auf das Laufrad (2) ausübbar ist.

10. Fahrradständersystem (1) gemäß Anspruch 9, **dadurch gekennzeichnet, dass** das Abstützelement (13) entlang einer Bügelschenkellängsachse (14) des Bügelschenkels (10) verlagerbar ist.

11. Fahrradständersystem (1) gemäß Anspruch 9 oder 10, **dadurch gekennzeichnet, dass** der Abstützabschnitt (16) durch eine Anlageoberfläche (17) des Abstützelements gebildet ist, wobei die Anlageoberfläche (17) bei bestimmungsgemäßer Montage des Abstützelements an der Abstützvorrichtung (9) parallel zur Ausnehmungslängsachse (6) und um einen durch die Bügelschenkellängsachse (14) und der Anlageoberfläche (17) eingeschlossenen Anstellwinkel geneigt ist, wobei die Anlageoberfläche (17) in Richtung der Oberseite (4) des Standkörpers (3) weist, sodass Fahrräder mit unterschiedlichen Laufradbreiten und Laufraddurchmessern innerhalb des Fahrradständersystems (1) aufstellbar sind.

12. Fahrradständersystem (1) gemäß einem der voranstehenden Ansprüche, **dadurch gekennzeichnet, dass** das Fahrradständersystem (1) einen Unterstützungskörper aufweist, der bei bestimmungsgemäßer Verwendung mit einer Standfläche auf einem Untergrund aufstellbar ist und mit einem Laufrad (2) in Eingriff bringbar ist.

## Claims

1. Bicycle stand system (1) for receiving a bicycle in a parked position, wherein the bicycle stand system (1) has a stand body (3), which, when used as intended, stands up with a stand surface on a base, wherein the stand body (3) has an annular recess (5) on a stand body (3) upper face (4) facing opposite the stand surface, the longitudinal axis (6) of which recess is oriented parallel to the longitudinal axis (7) of the stand body (3), wherein the recess (5) has a recess width along a recess transverse axis (8), such that a bicycle wheel (2) that is oriented parallel to the longitudinal axis can be at least partly received in the recess (5), wherein the bicycle stand system (1) has a bracket-shaped support device (9) with two bracket limbs (10), wherein the support device (9) is secured to the stand body (3) by means of the bracket limb ends (11) of the bracket limbs (10), wherein in a parked position of the bicycle, the wheel (2) can be supported by at least one bracket limb (10) such that the bicycle can be placed within the bicycle stand system (1) in a substantially upright placement position, **characterised in that** the stand body (3) has a plurality of securing sections (12) that are arranged at a distance from the longitudinal axis (6) of the recess and opposite one another at the same distance from the longitudinal axis (6) of the recess, wherein the plurality of securing sections (12) are mutually spaced in the longitudinal direction of the stand body (3), wherein the bracket-shaped support device (9) can be releasably secured to the bracket limb ends (11) and is thus movably secured to two respective opposing securing sections such that bicycle wheels with different wheel diameters can be placed within the bicycle stand system (1).

2. Bicycle stand system (1) according to claim 1, **characterised in that** the securing sections (12) are configured as holes.

3. Bicycle stand system (1) according to claim 1 or 2, **characterised in that** the stand body (2) is configured as a solid body.

4. Bicycle stand system (1) according to one of the preceding claims, **characterised in that** the stand body (3) has at least one fastening means for anchoring the stand body (3) to the base.

5. Bicycle stand system (1) according to one of the preceding claims, **characterised in that** the stand surface is formed by a plurality of stand elements arranged between the base and an underside of the stand body (3) facing the base.

6. Bicycle stand system (1) according to one of the preceding claims, **characterised in that** the recess (5) completely passes through the stand body (3) in the longitudinal direction.

7. Bicycle stand system (1) according to one of the preceding claims, **characterised in that** the recess width preferably has a width in the range from 54 mm to 65 mm.

8. Bicycle stand system (1) according to one of the preceding claims, **characterised in that** a clear width produced by the bracket limbs (10) preferably has a width in the range from 65 mm to 100 mm and a clear height preferably in the range from 650 mm to 700 mm.

9. Bicycle stand system (1) according to one of the preceding claims, **characterised in that** the bicycle stand system (1) has a support element (13) that can be detachably arranged on the support device (9), wherein the support element (13) has a support section (16), which, when mounted as intended, can be brought into contact with the wheel (2) so that a clamping force can be exerted by the support element (13) on the wheel (2).

10. Bicycle stand system (1) according to claim 9, **characterised in that** the support element (13) can be mounted along a bracket limb axis (14) of the bracket limb (10).

11. Bicycle stand system (1) according to claim 9 or 10, a according to the section (16) is formed by an abutment surface (17) of the support element, wherein the contact surface (17), when the support element is mounted on the support device (9) as intended, is parallel to the longitudinal axis (6) of the recess and inclined by an angle of incidence enclosed by the longitudinal axis (14) of the bracket limb and the contact surface (17), wherein the support surface (17) points towards the top (4) of the stand body (3) so that bicycles with different wheel widths and wheel diameters can be positioned within the bicycle stand system (1).

12. Bicycle stand system (1) according to one of the preceding claims, **characterised in that** the bicycle stand system (1) has a support body, which, when used as intended, can be set up with a base on a surface and can be brought into engagement with an impeller (2).

## Revendications

1. Système de support pour bicyclette (1) destiné à recevoir un bicyclette dans une position de stationnement, le système de support pour bicyclette (1) présentant un corps de support (3) qui, lors d'une utilisation conforme, repose par une surface d'appui sur un sol, le corps de support (3) présentant, sur un côté supérieur (4) opposé à la surface d'appui du corps de support (3), un évidement (5) en forme de rigole, dont l'axe longitudinal d'évidement (6) est orienté parallèlement à un axe longitudinal de corps de support (7) du corps de support (3), l'évidement (5) présentant, le long d'un axe transversal d'évidement (8), une largeur d'évidement de telle sorte qu'une roue (2) de la bicyclette, orientée parallèlement à l'axe longitudinal, peut être reçue au moins par sections dans l'évidement (5), le système de support pour bicyclette (1) présentant un dispositif de soutien en forme d'étrier (9) avec deux branches d'étrier (10), le dispositif de soutien (9) étant fixé au corps de support (3) par des extrémités de branche d'étrier (11) des branches d'étrier (10), la roue (2) pouvant être soutenue par au moins une branche d'étrier (10) dans une position de stationnement de la bicyclette, de telle sorte que la bicyclette peut être installée dans une position d'installation essentiellement verticale à l'intérieur du système de support pour bicyclette (1), **caractérisé en ce que** le corps de support (3) présente plusieurs sections de fixation (12) agencées à distance de l'axe longitudinal d'évidement (6) et opposées à égale distance de l'axe longitudinal d'évidement (6), les plusieurs sections de fixation (12) étant agencées à distance les unes des autres dans la direction longitudinale du corps de support (3), le dispositif de soutien en forme d'étrier (9) pouvant être fixé de manière amovible et donc déplaçable par les extrémités de branche d'étrier (11) sur deux sections de fixation opposées respectives, de telle sorte que des bicyclettes avec différents diamètres de roue (5) peuvent être installées à l'intérieur du système de support pour bicyclette (1).

2. Système de support pour bicyclette (1) selon la revendication 1, **caractérisé en ce que** les sections de fixation (12) sont conçues sous forme d'alésages.

3. Système de support pour bicyclette (1) selon la revendication 1 ou 2, **caractérisé en ce que** le corps de support (3) est conçu sous forme de corps massif plein.

4. Système de support pour bicyclette (1) selon l'une quelconque des revendications précédentes, **caractérisé en ce que** le corps de support (3) présente au moins un moyen d'attache pour ancrer le corps de support (3) sur le sol.

5. Système de support pour bicyclette (1) selon l'une quelconque des revendications précédentes, **caractérisé en ce que** la surface d'appui est formée par plusieurs éléments d'appui agencés entre le sol et un côté inférieur du corps de support (3) tourné vers le sol.

6. Système de support pour bicyclette (1) selon l'une quelconque des revendications précédentes, **caractérisé en ce que** l'évidement (5) traverse complètement le corps de support (3) dans la direction longitudinale.

7. Système de support pour bicyclette (1) selon l'une quelconque des revendications précédentes, **caractérisé en ce que** la largeur d'évidement présente de préférence une largeur dans la plage de 54 mm à 65 mm.

8. Système de support pour bicyclette (1) selon l'une quelconque des revendications précédentes, **caractérisé en ce qu'**une largeur intérieure créée par les branches d'étrier (10) présente de préférence une largeur dans la plage de 65 mm à 100 mm et une hauteur intérieure présente de préférence une hauteur dans la plage de 650 mm à 700 mm.

9. Système de support pour bicyclette (1) selon l'une quelconque des revendications précédentes, **caractérisé en ce que** le système de support pour bicyclette (1) présente un élément de soutien (13) pouvant être agencé de manière amovible sur le dispositif de soutien (9), l'élément de soutien (13) présentant une section de soutien (16) qui, lors d'un montage conforme, peut être mise en application avec la roue (2) de telle sorte qu'une force de serrage peut être exercée par l'élément de soutien (13) sur la roue (2).

10. Système de support pour bicyclette (1) selon la revendication 9, **caractérisé en ce que** l'élément de soutien (13) peut être déplacé le long d'un axe longitudinal de branche d'étrier (14) de la branche d'étrier (10).

11. Système de support pour bicyclette (1) selon la revendication 9 ou 10, **caractérisé en ce que** la section de soutien (16) est formée par une surface d'application (17) de l'élément de soutien, la surface d'application (17), lors d'un montage conforme de l'élément de soutien sur le dispositif de soutien (9), étant inclinée parallèlement à l'axe longitudinal d'évidement (6) et selon un angle d'inclinaison compris entre l'axe longitudinal de branche d'étrier (14) et la surface d'application (17), la surface d'application (17) étant orientée en direction du côté supérieur (4) du corps de support (3), de telle sorte que des bicyclettes ayant différentes largeurs de roues et différents diamètres de roues peuvent être installées à l'intérieur du système de support pour bicyclette (1).

12. Système de support pour bicyclette (1) selon l'une quelconque des revendications précédentes, **caractérisé en ce que** le système de support pour bicyclette (1) présente un corps de soutien (10) qui, lors d'une utilisation conforme, peut être installé avec une surface d'appui sur un sol et être mis en prise avec une roue (2).
